# EUROPEAN PATENT APPLICATION

(11) **EP 2 320 605 A1**
(43) Date of publication of application: **11.05.2011**
(21) Application number: 09809363.6
(22) Date of filing: 05.08.2009
(51) Int. Cl.: H04L 12/28

(54) **INTEGRAL CONTROL, SECURITY AND HOME AUTOMATION SYSTEM IN INTELLIGENT BUILDINGS**

(30) Priority: 28.08.2008 ES 200802506
(71) Applicant: Universidad De Murcia, 30003 Murcia (ES)
(72) Inventor: GÓMEZ SKARMETA, Antonio Fernando, E-30003 Murcia (ES); ZAMORA IZQUIERDO, Miguel Ángel, E-30003 Murcia (ES); SANTA LOZANO, José, E-30003 Murcia (ES)
(74) Representative: Elzaburu Marquez, Alberto
(86) International application number: PCT/ES2009/070334
(87) International publication number: WO 2010/023339

(57) **Abstract**

Integral control, security and home automation system for intelligent buildings, especially useful in the control of dwellings and buildings, the architecture of which comprises an automation module HAM (1) which centralizes control in the area in which the control system is going to be used, various control panels (2) which are installed at various locations in the area and are used as a user interface for controlling the various parts of the building, a local residential gateway (3) which is connected to the automation module HAM (1) via a LAN (12) such that it deals with the tasks of communicating with the various devices and actuators, various CAN control modules (5) which provide connectivity to various home automation devices, a remote residential gateway (13) and an alarm control centre (14).

## Description

The invention which is described is an integral control, security and home automation system in intelligent buildings. The field of application of the present invention is mainly that of remote control and automation systems, and more particularly the hardware, software and methods for the implementation of automation systems in dwellings or home automation systems. However, its features allow its use in other areas, such as the industrial area.

### State of the Art

When automation in dwellings or home automation is mentioned, an assembly of expensive devices which automate many of the elements of a dwelling and make it intelligent, without necessarily being indispensable, is generally thought of in the first place. However, this situation has recently changed and, currently, the set of technologies and services which can be provided by home automation can change the way in which these automation systems are seen. The initial solutions, which turned the lights on according to the presence of the inhabitants, has given way to home automation systems capable of controlling most electrical household appliances and monitoring the status of the house.

The main fields of application in which home automation can be applied in a dwelling are security, multimedia, aid in domestic tasks, energy saving and environmental control, and network control. Furthermore, the potential clients of these systems are usually workers who need to save time, elderly persons who need assistance, and users who work from home and desire a remote control in their home. Thus, the number of services offered and the large variety of clients make the adaptation of commercial solutions to the specific requirements of users a challenge for the companies of the sector. This adaptation must furthermore take into account the usefulness of the system in the target environment. The boundary between a system aiding the inhabitants with daily tasks and a system performing unwanted automatic actions is occasionally narrow.

Meanwhile, the home automation marker is undergoing a war of standards and specifications since the beginning of the 1990s. The interconnection protocols used, which specify how the electrical household appliances, automation modules and residential gateway communicate, have changed continuously for years. The status of home automation protocols, at least in Europe, is currently more stable, and EIB (European Installation Bus) is established as the most used specification. A similar problem has recently arisen in wireless communications for household networks, due to the continuous progress. In addition to initial solutions based on UHF radio (433 and 868 MHz) and the most recent solutions based on Bluetooth, new technologies are emerging for the purpose of meeting the requirements of wireless communications in automation solutions of dwellings. Zigbee and Z-Wave are currently attempting to become references in household networks for future home automation systems, and symbolize the continuous battle between technologies in the field of home automation.

The research in home automation has been closely linked to this unstable market. Home automation systems take into account the demand of the users and the latest technologies for deploying horizontal systems for home automation. This symbiosis between research and the consumption market has resulted in works which are excessively focused on technologies, works in which the prototype partially implements the designed system (generally the automation unit, which centralizes the control of the house), or works which only include a description of the logic module used. The cost for developing these systems is obviously a drawback for the community which carries out research in the field of home automation. Taking all this into account, the present invention has paid special attention to elements such as the possibility of extension by modules and the remote management through the Internet. It is useful to emphasize the lack of high-level communication protocols which allow implementing value-added services by means of the access to the main automation module. The insufficient treatment of security in IP communication in most of the current solutions should also be emphasized. Environmental intelligence is, on the other hand, entering the household field, and concepts such as "awareness" and ubiquity" are being applied to home automation technologies and providing intelligence to dwellings. Various configurations on home automation systems and their connections are known in the state of the art, it being possible to mention, among others, those described in the documents ES 2 297 514 T3, ES 2 263 439 T3 and ES 2 255 835 B1.

### Description of the Invention

The invention which is described refers to an integral control, security and home automation system for intelligent buildings. Its most outstanding feature consists of having an architecture made up of:
- an automation module (HAM), as the main element of the system, including at least a main configuration database,
- various control panels, acting as a user interface,
- a local residential gateway, for communicating with the outside of the building,
- various CAN control modules, for a distributed control of devices and lights,
- a remote residential gateway, which allows performing the remote management of the system,
- an alarm control center, for the reception and management of alarms,
- a configuration and installation application through a computer connected to the system through the Internet,
- an administration application which allows acting as an interface from a computer connected to the Internet,
   such that a LAN communications network links the automation module, the various control panels and the local residential gateway; the various CAN input/output modules are linked with the automation module through a CAN bus, and the remote residential gateway and the alarm control center are connected through the Internet with the different elements of the building, and said alarm control center is furthermore connected by means of PSTN with the automation module (HAM).

The mentioned automation module (HAM) is in turn formed by:
- a main processing card (MPU) based on a microcontroller and equipped with basic input/output capabilities through serial and parallel ports, I2C, SPI and Ethernet,
- a communications card providing cellular, telephone, CAN bus and Zigbee connectivity to the system,
- a base expansion card, provided with analog and digital inputs and outputs to the system,
- a power supply source and battery, in the event of a supply failure in the electric network,
- lateral expansion modules, for having a larger number of inputs and outputs,
- and optionally a graphic interface, of the type of a touch-sensitive color LCD, or alphanumeric screen and keyboard, and the remote CAN modules are formed by:
- a set of analog and digital inputs,
- a set of outputs, which allows controlling the regulation of the intensity for lighting systems,
- a set of inputs wherein simple push-buttons are connected to be able to act on the previous outputs (turning on, turning off and regulating),
   and the control panels are formed by:
- an MPU main processing card, and
- an LCD type touch-sensitive color graphic device,
such that the entire system allows an update and maintenance in a remote manner, through the Internet by an operator of the system, and admits several configurations and types of interaction systems, either through the control panels or from any computer using the administration application located in the local residential gateway and/or remote residential gateway.

One of the main features of the automation module (HAM) is that it can:
- be connected to the different elements of the building simultaneously through the home automation buses X10 and EIB, perform connections through CAN bus, wireless connections by means of Zigbee or connections directly to the inputs and outputs of the different expansions of the automation module (HAM) or of the CAN input/output modules, and,
- act, at the same time, as an EIB device by offering to the elements connected to the EIB bus (touch screens, keyboards, sensors) full control of the rest of the elements of the building, whichever the technology of those mentioned of these elements (X10, ZigBee).

The communication between the automation module (HAM) and the alarm control center can be performed simultaneously by the following means:
- through WAN IP access by wired means, i.e., by means of an Ethernet connection, therefore supporting, among others, the connection to cable modem, ISDN or ADSL lines,
- through IP access in cellular telephony networks (GPRS/UTMS systems),
- through SMS messages within GSM networks,
- using the PSTN fixed telephony infrastructure,
and strategies can be performed combining these routes, there furthermore being a simultaneous and uninterrupted IP communication to verify that the alarm system is armed and works correctly.

Other features of the automation module (HAM) and its corresponding architecture are:
- it can be remotely extended and configured, such that with a minimum configuration formed by the automation module (HAM) the system can already work with the entire functionality,
- it can grow in a centralized manner according to the size of the building to be controlled through the base expansion card and lateral expansion cards and, at the same time, it can also grow in a decentralized manner through the devices connected to the different possible buses,
- and all the extensions can be remotely configured.

The integral control, security and home automation system for intelligent buildings uses a distributed strategy upon storing the configuration and status data of the apparatuses (configuration database), such that replicas of the information stored in the automation module (HAM) are maintained in the pieces of remote equipment (local residential gateway, remote residential gateway and control panels), such replicas only being updated when changes are detected, which reduces the number of direct accesses to the automation module (HAM) as well as the response time and, at the same time, involves a redundancy of the information of the system.

A SHAP (Superior Home Automation Protocol) communications protocol, which uses UDP as a transport layer, connects the automation module (HAM) with the different local and remote devices, following a sliding window strategy to assure the data stream control.

In the system, the control panels send control messages to the automation module (HAM) using the SHAP protocol, such that the control panels record any change of status of a device when it receives the confirmation from the automation module (HAM).

The distribution of the information in the pieces of remote equipment is performed in two differentiated phases:
- synchronization phase, coinciding with the start-up of the piece of remote equipment or with the detection of loss of connection in the LAN network, wherein the configuration and status data of the apparatuses are invalid and a complete update thereof is required; this causes a traffic of query packets generated by the piece of remote equipment and directed to the automation module (HAM), with the intention of updating all the information thereof,
   and,
- refreshing phase, which allows having the status of the apparatuses updated if any piece of remote equipment or the automation module (HAM) performs any change in the data, such that the data refreshing process is centralized by the automation module (HAM) which is in charge of updating the piece or pieces of remote equipment needing it.

The data refreshing strategy which is followed is:
- a piece of remote equipment modifies the status of an apparatus,
- the modification is notified to the automation module (HAM),
- the automation module (HAM) notifies the change of status in the rest of the pieces of remote equipment, such that for the control panels the notification is sent by broadcast to the network (broadcast), whereas for the local residential gateway and the remote residential gateway, the notification is performed individually (unicast).

The SHAP protocol performs an approach based on symmetric cryptography, such that by means of an SHA-2 (Secure Hash Algorithm) algorithm a hash of the load of all the packets is calculated, and the resulting value is encrypted together with the header by means of AES (Advanced Encryption Standard), using a symmetric key shared between the entities of the system, the message being completed with a cyclic redundancy code (CRC) of the complete packet.

Likewise, the SHAP protocol is extended for the specific task of sending alerts to an IP alarm receiver such that, as a step prior to sending them, a negotiation is performed which determines the format which will be used to encapsulate the alerts in the packets to be sent later; such that the automation module (HAM) thus proposes a list of formats with which it is compatible and, in response, the alarm control center decides which of them will be used, based on the scheme of priorities it has predefined therein.

### Description of the Drawings

A set of drawings is attached to the present specification as an integral part thereof, in which the following has been depicted with an illustrative and non-limiting character:
Figure 1 shows the general architecture of the system with all the modules integrating it.
Figure 2 shows the skeleton of the hardware of the system with all the cards integrating it, in the automation module as well as in the control panels and remote CAN modules.
Figure 3 shows a complete depiction of the automation unit; the lower part shows the cover with the LCD touch screen, and the upper part shows the cards of the automation unit on the left, and the battery, power supply source on the right, together with the transceiver module X10 and EIB.

The following reference numbers mention the various devices which are described in relation to the invention:
- 1: - Automation module (HAM) of the building.
- 2: - Control panel.
- 3: - Local residential gateway.
- 4: - IP cameras.
- 5: - CAN modules.
- 6: - Sensors.
- 7: - Electrical household appliances.
- 8: - Zigbee.
- 9: - EIB Bus.
- 10: - X10 Bus.
- 11: - CAN BUS.
- 12: - LAN network.
- 13: - Remote residential gateway.
- 14: - Alarm control center.
- 15: - PSTN alarm receiver.
- 16: - Cellular alarm receiver.
- 17: - WAN alarm receiver.
- 18: - Computer.
- 19: - Mobile telephone.
- 20: - Internet.
- 21: - MPU main processing card.
- 22: - Communications card.
- 23: - Base expansion card.
- 24: - Lateral expansion card.
- 25: - LCD touch screen.
- 26: - I/O (input/output) expansion bus.
- 27: - EIB transceiver.
- 28: - X10 transceiver.
- 29: Power supply source.
- 30: - Battery.
- 31: - Home automation devices.
- 32: - SHAP protocol.
- 33: - Database of the system.
- 34: - Installation and configuration application.
- 35: - Administration application.

### Description of a Preferred Embodiment of the Invention

The invention consists of a control architecture made up of a set of interconnected devices, intended for the home automation control and the automation of buildings, with a series of connectivity and functionality requirements making it useful in the field of security, comfort, leisure and accessibility in buildings.

The described system explores the automation potential in dwellings on the current market, avoiding a strong dependency on the existing technologies, considering prior experiences and proposing innovative services as a result of the analysis, design and implementation of a complete architecture for home automation control within a mixed industrial and academic environment.

The system is designed for a broad diffusion in the home automation sector and the sector of automation in buildings, which involves a number of configuration possibilities according to the topology of each specific case.

Furthermore, the system is designed for a inexpert end user (consumption market), whereby the maintenance is the lowest possible, it being possible to remotely carry out a diagnosis, extension and update of functionalities of the system, without the intervention of the user.

The main applications of the integral control, security and home automation system in intelligent buildings are the following:
- Control of electrical household appliances.
- Use of various home automation communication protocols.
- Centralized control in the automation module.
- Management of the system from inside the home through intuitive touch screens.
- Fault-tolerant design by means of replication of the configuration database.
- Value-added services in local and remote residential gateways.
- Administration and monitoring of the system by means of 3D software, through a connection to the Internet.
- Remote programming of the automation module.
- Security services through several possible alarm receivers connected through different public network technologies (WAN, GPRS/UMTS, PSTN).
- Flexibility, due to the fact that the system can be adapted to be specific solutions, choosing the desired features. Almost all the elements of the architecture are optional.

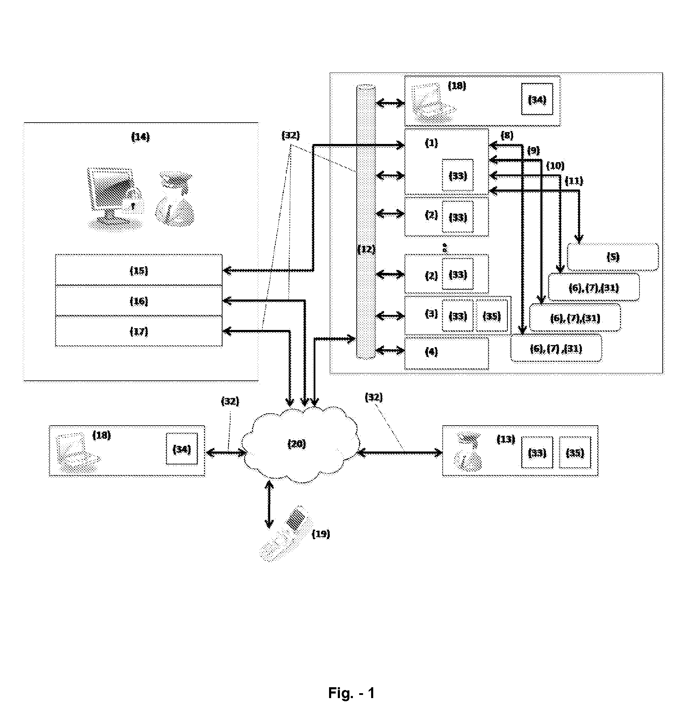

Figure 1 shows the architecture of the automation system. As can be seen, the architecture is divided into the system installed in the dwelling and the connections with various remote elements. Although the diagram includes all the possible elements in a complete solution for the automation of buildings, the system is completely modular. Furthermore, it is important to emphasize how the generic nature of the system allows not only applying this automation architecture to dwellings, but also in other areas such as offices, schools, malls, resorts, and in general, any other domain in which home automation can be applied.

As has been mentioned, almost all the elements of the architecture can be considered optional, providing a flexible and modular architecture. The network within the dwelling is centralized in an embedded solution provided by an automation module. The latter is capable of working with the most common home automation specifications, such as X10, EIB and ZigBee, to connect with sensors, actuators, devices and electrical household appliances installed in the dwelling. In addition, a protocol based on UDP over the IP network is used to connect the rest of the elements with the automation module. To provide a simple and intuitive control, different control panels can be distributed over the dwelling. Furthermore, the local and remote residential gateways provide administration and monitoring capabilities to the users and security companies, respectively. A robust safety system has been designed to allow the hired companies to receive alarm messages by means of different technologies.

The main component of the architecture is the automation module (1) of the dwelling or HAM (Home Automation Module). This element is the core of the system and is connected with all the electrical household appliances (7), sensors (6) and home automation devices (31) (blinds, lights, etc). This HAM automation module (1) thus centralizes the intelligence of the building, because it contains the configuration used to control all the devices installed. A local database (33) stores in a non-volatile memory the actions which have to be executed according to conditions which are programmed or based on readings of sensors (6).

The HAM automation module (1) can further include a user interface. Nevertheless, control panels (2) can be installed in different places, which serve as a user interface to control the parts of the house or of the building defined in each case. For example, in an office building, each floor can have a control panel (2) for configuring the suitable temperature, closing blinds or specifying the intensity of the lights independently (for example, by floor).

The local residential gateway (3) of the building offers value-added services for the monitoring and administration of the system. This gateway (3) is communicated with the HAM automation module (1) through a LAN communications network (12), leaving the tasks of communication with home automation devices (31), sensors (6) and electrical household appliances (7) to said HAM automation module (1). Some solutions of the known state of the art leave these tasks directly residential gateways based on PCs, but this is not considered a suitable strategy. The embedded solution used in the HAM automation module (1) offers a fault-tolerant architecture, more suitable for assuring the correct operation of the household devices at all times. In the architecture set forth, the local residential gateway (3), based on an embedded PC, is used to offer extra services to the inhabitants of the dwelling, and to perform the network tasks of the transport layer to the applications layer in an OSI stack. In the local residential gateway (3) the OSGi (Open Services Gateway initiative) middleware is used to manage the lifecycle of the services covered by these features. Thus, a service implementing the UDP protocol designed to connect with the automation unit enables the development of other applications, and the HTTP service offered by OSGi is used by a web application to provide local/remote administration capabilities through a 3D interface (administration application (35)). The user could, for example, access the network of the dwelling from his/her workplace, under a prior authentication process of course. Additionally, the system offers, as a simpler alternative, remote control through SMS by means of a mobile telephone (19), in the event that there is no connection to the Internet (20).

Most previous efforts for designing new protocols for interconnection in home automation have been aimed at timid proposals of communication between a home automation controller and electrical household appliances. The system described in the present invention, in contrast, is focused on the specifications currently supported in the connection between the automation module and the devices, and proposes a novel communications protocol connecting the main modules of the architecture through IP.

The HAM automation module (1) supports several network controllers for connecting with the different devices of the building. As a complement to this, it has analog and digital inputs and outputs in its base expansion (23) and the different lateral expansions (24) which can be annexed. Furthermore, through a CAN (Control Area Network) bus (11) it is possible to use remote inputs and outputs in structures with a more distributed approach. The CAN modules (5) designed for this architecture incorporate a set of analog and digital inputs, a set of outputs, which control relays or other devices (such as potentiometers), which allows controlling the regulation of the intensity for lighting systems, and a set of inputs wherein simple push-buttons are connected to be able to act on the previous outputs. Connectivity through the X10 bus (10) on the electric network is furthermore offered, considering low-cost home automation installations, whereas an EIB bus (9) offers a powerful solution for a connection with devices with a higher control capability. Finally, ZigBee (8) can be used to prevent wiring in already constructed buildings or dwellings.

As has already been indicated, a LAN communications network (12) is used in the building to connect all the control panels (2), the local residential gateway (3) and the HAM automation module (1). The latter maintains a main configuration database (33), but each control panel (2) and the local residential gateway (3) include a local replica to prevent the overload of the network. The technology LAN used can be Ethernet, and the 802.11i standard for installations in which wireless communications are preferable.

The LAN network (12) of the building is connected to the Internet (20) by means of one of the different technologies available today. An ADSL, ISDN or cable modem connection could be sufficient to provide remote monitoring and control, and offer a basic security system.

The SHAP (Superior Home Automation Protocol) protocol (32) is a communications protocol based on UDP, used to connect the main components of the home automation system over the IP network. This protocol connects the HAM automation module (1) with the local and remote entities following a sliding window strategy to assure the data stream control.

Control messages are sent from the control panels (2) to the HAM automation module (1) using the SHAP protocol (32). The control panels (2) record any change of status of a device when it receives the confirmation of the HAM automation module (1). This technique assures consistency because each control panel (2) stores a reduced local copy of the database (33) containing the status of each controlled device. The communications between the local residential gateway (3), the remote residential gateway (13) and the HAM automation module (1) follow the same strategy. The database (33) stored in the remote residential gateway (13) is only a part of the complete status of the dwelling because its function only relates to the security part. However, the database (33) maintained in the local residential gateway (3) is a complete copy of the one stored in the non-volatile memory of the HAM automation module (1), because the administration software offers a complete control of the dwelling.

The distribution of the information in the pieces of remote equipment is performed in two differentiated phases:
- Synchronization phase: it coincides with the start-up of the piece of remote equipment or with the detection of loss of connection in the LAN network (12), wherein it is supposed that the configuration and status data of the apparatuses are invalid and a complete update thereof is required. This phase causes a traffic of query packets generated by the piece of remote equipment and directed to the HAM automation module (1), with the intention of updating all the information thereof.
- Refreshing phase: it allows having the status of the apparatuses updated if any piece of remote equipment or the HAM automation module (1) performs any change in the data. The entire data refreshing process is centralized by the HAM automation module (1) which is in charge of updating the piece or pieces of remote equipment needing it. The data refreshing strategy which is followed is:
- A piece of remote equipment modifies the status of an apparatus.
- The modification is notified to the HAM automation module (1).
- The HAM automation module (1) notifies the change of status in the rest of the pieces of remote equipment. For the control panels (2), given that there may be a variable number thereof, the notification is sent by broadcast to the network (broadcast), whereby a processing overload is prevented. In contrast, in the case of the local residential gateway (3) and the remote residential gateway (13), the notification is performed individually (unicast).

With this distribution strategy, it is achieved that each piece of remote equipment keeps at all times an updated copy of the data of the system while the latter is operating.

The SHAP protocol (32) further includes a set of messages used to remotely program the code of the HAM automation module (1) and the control panels (2). A software for carrying out this task has been developed, which allows specialized personnel to locally or remotely update the firmware of the HAM automation module (1).

Obviously, the security risks involved in a home automation control protocol designed on the UDP/IP stack have been considered. The access to the network of the dwelling from the outside (Internet, (20)) has various security implications relating to confidentiality, authenticity, authorization and integrity. In this sense, with the intention of eliminating these risks, the SHAP protocol (32) focuses on an approach based on symmetric cryptography. By means of SHA-2 (Secure Hash Algorithm) a hash of the load of all the packets is calculated, and the resulting value is encrypted together with the header by means of AES (Advanced Encryption Standard), using a symmetric key shared between the entities of the system. The message is completed with a CRC (Cyclic redundancy code) of the complete packet. The SHA hash assures the integrity of the load, and the AES encryption provides authenticity of the transmitted information, because the synchronization between the emitter and the receiver (included in the header) is concealed. The confidentiality is not directly offered by the load of the packet, because it is assumed that the encapsulated packets themselves must support encryption if it is necessary. Encrypting the messages of the memory map in a writing operation of the HAM automation module (1) is unnecessary, for example, since the decoding of all the messages would delay the process too much. The alarm messages, on the other hand, can offer encryption by themselves. At the service level, confidentiality is offered by means of a secure HTTPS access. In the same way, the access control implemented in the 3D administration application (35) offers authentication in the access to the system.

Due to the relevance of the security services in current home automation systems in households, an integral security system has been included in the architecture of the system. Local sensors (6) connected to the HAM automation module (1), such as presence, noise and door-opening sensors, are used as inputs of the security system. As can be seen in Figure 1, there are several entities called "alarm receivers": the PSTN alarm receiver (15), the cellular alarm receiver (16), and the WAN alarm receiver (17); all of them are located in an alarm control center (14), which are in charge of receiving the security events of the buildings. These alarm receivers (15), (16), (17), are logic entities (software) which are executed on servers located in the alarm control center (14) of the security company involved.

As has been indicated, there are several types of alarm receivers. The most common one is that which connects with a building through the Internet (20) using a connection by cable. However, the system offers the possibility of connecting the HAM automation module (1) with the central unit using a cellular network (CN) or the telephone network (PSTN). The solution based on the use of a cellular network requires a modem in the HAM automation module (1), such that the operator of the network offers a direct connection to the Internet (20). The WAN alarm receivers (17), based on a connection to the Internet (20) by cable, or the cellular network alarm receivers (16), receive security notifications by means of specific messages of the SHAP protocol (32). In the event of using a telephone network connection (PSTN), a coding based on tones is used to send the security events. These three approaches can, however, be combined, and several of the same type can even be included to offer an improved reliability. The alarm events are simultaneously notified through all the alarm receivers (15), (16), (17). Furthermore, a strategy of continuous periodic communication between the receivers (15), (16), (17) and the HAM automation module (1) is followed. This mechanism prevents a hacker from being able to block the security channels.

All the security notifications received by the alarm receivers are forwarded to the alarm control center (14) of the security company involved, wherein a software is used to process all the events. The alarm messages use the Contact ID standard; however, the system is prepared to support other types of format such as 4+2. For the specific task of sending alerts to an IP alarm receiver (16), (17) the SHAP protocol (32) is extended such that, as a step prior to sending them, a negotiation is performed which determines the format which will be used to encapsulate the alerts in the packets to be sent later. In this case, the HAM automation module (1) proposes a list of formats with which it is compatible and, in response, the central unit decides which of them will be used, based on the scheme of priorities it has predefined therein. Each of the formats which are supported is represented by a number or version, and the list of the supported versions is completely or partially known both by the HAM automation module (1) and by the IP receivers (16), (17). The common cases is that there are various HAM automation modules (1), each supporting a different version, whereas the IP receivers (16), (17) are compatibles with several versions to assure the compatibility both with older automation modules (HAM) (1) and with others which have been subsequently installed, without needing to reprogram the older ones to assure that they can continue sending alerts to the IP receivers (16), (17).

The automated buildings are occasionally included in a housing development domain in which a security service is offered. In this case, the system offers the possibility of applying a monitoring and security strategy on this set of dwellings from the local control center in which the security personnel operates. The remote residential gateway (13) is used in the system for this purpose. A typical case in which to include this element is the local security service offered in a residential complex (see Figure 1). The remote residential gateway (13) is used in this configuration to receive the security events of the buildings. This could be a preferable option in small or medium administrative domains. The remote residential gateway (13) contains a modified version of the software installed in local residential gateways (3), so it is capable of connecting with the individual HAM automation modules (1) of each building. It thus includes an interface allowing the security personnel to centralize the security events of all the controlled houses. The remote residential gateway (13) also stores a reduced local copy of the database (33) containing the status of each controlled device. The remote residential gateway (13) could occasionally be located in the same LAN network (12) as the controlled buildings. Figure 1 shows the most general case.

The different entities of the architecture, integral control, security and home automation system, are set forth in detail below.

### The automation module

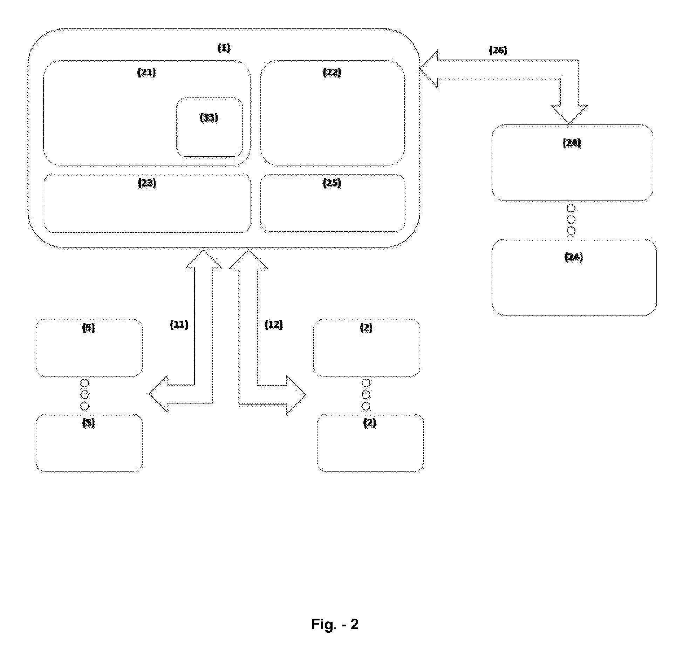

The HAM automation module (1) is based on the SIROCO (System for Integral ContROI and Communication) hardware architecture. The different modules making up the unit can be seen in Figure 2. SIROCO is a modular system which is highly adaptable and compatible with the current security regulation (EN-50131 and EN-50136). Similar systems often focus on simpler and less flexible architectures; in contrast, SIROCO provides the option of installing a low-cost solution or more complete systems by expanding the base hardware with the required modules.

The heart of the system is a 32-bit microcontroller based on the ARM architecture. A MPU (Main Processor Unit) main processing card (21) is equipped with basic input/output capabilities through serial and parallel ports, I2C, SPI, and an Ethernet connection. The MPU processing card (21) is the base of both the HAM automation module (1) and the control panels (2). The HAM automation module (1) can also be extended through more cards which provide them with a higher input/output and communications capability. The specific communications for home automation are provided by the transceivers X10 (28) and EIB (27). The user interface is an 5.6" LCD type color touch screen (25). There is a low-cost user interface version formed by an alphanumeric LCD and a 16-button keyboard. The MPU processing card (21) is extended with two additional cards: the base expansion card (23) and the communications card (22).

The base expansion card (23) provides a direct input/output interface for sensors (6), electrical household appliances (7) and home automation devices (31) to be controlled. SIROCO is designed as an automation system distributed by means of its different buses, but it furthermore supports a large number of connections centralized in the control module. In addition to the base expansion, included in the central unit, it is possible to add up to 16 additional cards called lateral expansion modules or cards (24) through the I/O input/output expansion bus (26), which increases the direct connectivity of the central unit. With this configuration, complex control schemes can be dealt with.

The communications card (22) is equipped with a ZigBee radio interface (8), for the communication with wireless sensors, and a wired connection of CAN bus (11). Small-sized CAN modules (5) have been developed which have dimmers and additional remote inputs/outputs for providing connectivity with a wide range of home automation devices (31) (lights, blinds, etc.). The CAN bus (11) is offered as an alternative to the EIB bus (9) for cases in which a more flexible wired communications channel with remote sensors not necessarily compatible with EIB is required. In addition to Ethernet interface channel provided by the MPU main card (21), the communications card (22) includes a cellular modem (GSM/GPRS/UMTS) and a DTMF (Dual-Tone MultiFrequency) telephone interface, mainly aimed at sending security events to the alarm receivers.

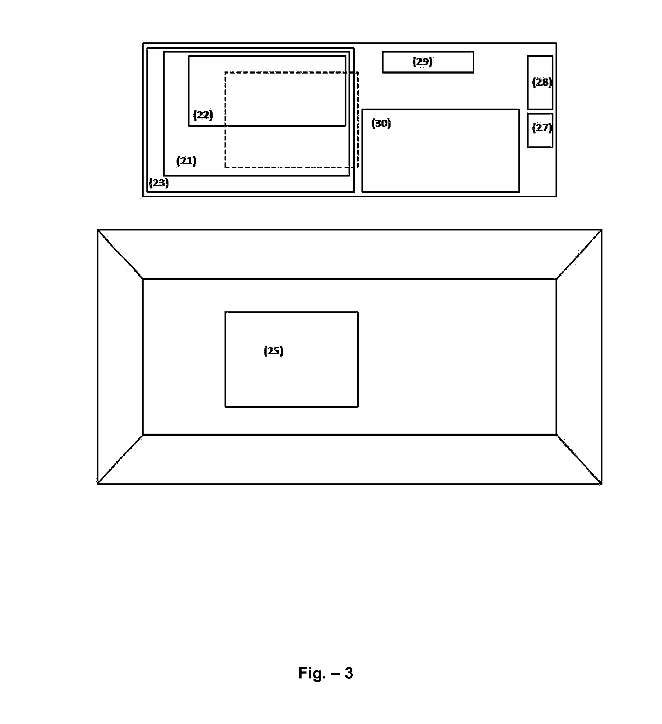

Figure 3 shows the HAM automation module (1) in the version including the touch screen (25) as a user interface (see the lower arrangement). The MPU processing card (21) is visible at the upper part of the circuits, and the base expansion of inputs and outputs is below it. The communications card (22) is connected on the MPU main card (21), and is wired with the transceiver modules X-10 (28) and EIB (27). The HAM automation module (1) has a power supply source (29) and battery (30) to prevent power supply failures of the system.

### Control panels

The system has additional control panels (2), based on the same SIROCO hardware architecture. These panels assure a familiar user interface, equivalent to that offered by the HAM automation module (1) provided with a touch screen (25). The control panels (2) offer to the users the management of the local automated devices in their environment (lights, blinds, electrical household appliances, air conditioning, etc.), and the correlation between events and associated actions.

It is additionally possible to program periodic or specific actions. The control panels (2), however, cannot directly access the general configuration of the system, stored in the HAM automation module (1). The SHAP protocol (32) is used to send commands to the HAM automation module (1), as has been described above. More complex control actions can be defined through the administration application, accessible through the IP network.

The users can define configuration profiles in the control panels. Thus, a set of statuses of the devices, and actions to be carried out under certain conditions, can be saved using familiar names such as ""At work" or "Sleeping".

The alarm of the house can be armed/disarmed through a previously defined control panel (2). However, any panel can be used to activate the panic, security and fire alarms at any time. Furthermore, when the alarm is activated by the HAM automation module (1) (due to the reading of sensors), the control panels notify the users with sound and light signals.

### Configuration and installation software

The configuration and installation application (34) allows the specialized personnel local or remote access to the configuration of the dwelling through a computer (18) with an IP connection with the HAM automation module (1). The application uses a UDP/IP access through the SHAP protocol (32), or a direct serial connection with the HAM automation module (1).

The software allows the installer to configure the different partitions and areas of the security system, establish the devices connected to the system, and define the communications channels allowed from the outside to the dwelling. All this information is stored in the database (33) of the HAM automation module (1). The user interface allows establishing initial operation profiles and actions to be executed under certain events detected by the sensors. For the purpose of making the configuration of the dwellings simpler, the application offers to the user predefined configurations which can be used as a starting point. All the configurations can furthermore be saved for their subsequent use in other dwellings.

In addition to the use of the software for modifying the general configuration of the dwelling, the application can be used to monitor the communications. The traffic through the networks X10 (10), EIB (9) and the UDP packets sent and received by the HAM automation module (1) can be analyzed with this tool.

Residential Gateway. Local/remote administration

### application of the system

In addition to the control panels (2) and the optional screen (25) in the HAM automation module (1), an administration application (35) offers to the users local and remote monitoring and control capabilities from any computer (18) connected to the Internet (20). As has already been explained, the application is located in a HTTP server in the local residential gateway (3). The latter includes a program based on Flash technology, which is downloaded from the server and offers an extended view of the whole house.

The user, using this administration application (35), has a three-dimensional (3D) view of the house and can handle the automation system as if he/she was in the dwelling. Several IP cameras (4) installed in the dwelling can be used to offer a real-time view of the desired places of the dwelling.

A variant of this application is available for the remote residential gateway (13), in places in which local security services can be offered. By means of this software, the security personnel in housing developments and resorts can monitor all the automated houses. This version of the application centralizes the reception of alarms of the houses, and includes basic features for controlling certain devices, such as the lights of the hall, security sensors and audible alarms. Such scheme reduces the price of the deployment of the system in low-cost installations, since the monitoring tasks are left to the security personnel, and the local residential gateways are not necessary.

## Claims

1. An integral control, security and home automation system for intelligent buildings **characterized by** an architecture made up of:
- a HAM automation module (1), as the main element of the system, including at least a main configuration database (33),
- various control panels (2), acting as a user interface,
- a local residential gateway (3), for communicating with the outside of the building,
- various CAN control modules (5), for a distributed control of devices and lights,
- a remote residential gateway (13), which allows performing the remote management of the system,
- an alarm control center (14), for the reception and management of alarms (15), (16), (17),
- a configuration and installation application (34) through a computer connected to the system through the Internet (20),
- an administration application (35) which allows acting as an interface from a computer connected to the Internet (20), wherein a LAN communications network (12) links the automation module (1), the various control panels (2) and the local residential gateway (3), and the various input/output CAN modules (5) are linked with the automation module (1) through a CAN bus (11), and the remote residential gateway (13) and the alarm control center (14) are connected through the Internet (20) with the different elements of the building, and said alarm control center (14) is furthermore connected by means of PSTN with the HAM automation module (1).

2. The integral control, security and home automation system for intelligent buildings according to claim 1, **characterized in that** the HAM automation module (1) is formed by:
- an MPU main processing card (21) based on a microcontroller and equipped with basic input/output capabilities through serial and parallel ports, I2C, SPI and Ethernet,
- a communications card (22) providing cellular, telephone, CAN bus and Zigbee connectivity to the system,
- a base expansion card (23), provided with analog and digital inputs and outputs to the system,
- a power supply source (29) and battery (30), in the event of a supply failure in the electric network,
- lateral expansion modules (24), for having a larger number of inputs and outputs,
- and optionally a graphic interface (25), of the type of a touch-sensitive color LCD, or alphanumeric screen and keyboard, and the remote CAN modules (5) are formed by:
- a set of analog and digital inputs,
- a set of outputs, which allows controlling the regulation of the intensity for lighting systems,
- a set of inputs wherein simple push-buttons are connected to be able to act on the previous outputs (turning on, turning off and regulating), and the control panels (2) are formed by:
- an MPU main processing card, and
- an LCD type touch-sensitive color graphic device, such that the entire system allows an update and maintenance in a remote manner, through the Internet (20) by an operator of the system, and admits several configurations and types of interaction systems, either through the control panels (2) or from any computer (18) using the administration application (35) located in the local residential gateway (3) and/or remote residential gateway (13).

3. The integral control, security and home automation system for intelligent buildings according to any of the previous claims, **characterized in that** the HAM automation module (1) can:
- be connected to the different elements of the building simultaneously through the home automation buses X10 (10) and EIB (9), perform connections through CAN bus (11), wireless connections by means of Zigbee (8) or connections directly to the inputs and outputs of the different expansions (23), (24) of the HAM automation module (1) or of the CAN input/output modules (5),
and
- act, at the same time, as an EIB device by offering to the elements connected to the EIB bus (9) (touch screens, keyboards, sensors) full control of the rest of the elements of the building, whichever the technology of those mentioned of these elements (X10, ZigBee).

4. The integral control, security and home automation system for intelligent buildings according to any of the previous claims, **characterized in that** the communication between the HAM automation module (1) and the alarm control center (14) can be performed simultaneously by the following means:
- through WAN IP access by wired means, i.e., by means of an Ethernet connection, therefore supporting, among others, the connection to cable modem, ISDN or ADSL lines,
- through IP access in cellular telephony networks (GPRS/UTMS systems),
- through SMS messages within GSM networks,
- using the PSTN fixed telephony infrastructure,
and strategies can be performed combining these routes, there furthermore being a simultaneous and uninterrupted IP communication to verify that the alarm system is armed and works correctly.

5. The integral control, security and home automation system for intelligent buildings according to any of the previous claims, **characterized in that** the HAM automation module (1) has an architecture which:
- can be remotely extended and configured, such that with a minimum configuration formed by the HAM automation module (1) the system can already work with the entire functionality,
- can grow in a centralized manner according to the size of the building to be controlled through the base expansion card (23) and lateral expansion cards (24) and, at the same time, can also grow in a decentralized manner through the devices connected to the different possible buses (8), (9),(10), (11), (12),
- and all the extensions can be remotely configured.

6. The integral control, security and home automation system for intelligent buildings according to any of the previous claims, **characterized in that** it used a distributed strategy upon storing the configuration and status data of the apparatuses (configuration database (33)), such that replicas of the information stored in the HAM automation module (1) are maintained in the pieces of remote equipment (local residential gateway (3), remote residential gateway (13) and control panels (2)), such replicas only being updated when changes are detected, which reduces the number of direct accesses to the HAM automation module (1) as well as the response time and, at the same time, involves a redundancy of the information of the system.

7. The integral control, security and home automation system for intelligent buildings according to any of the previous claims, **characterized in that** a SHAP (Superior Home Automation Protocol) communications protocol (32), which uses UDP as a transport layer, connects the HAM automation module (1) with the different local and remote devices, following a sliding window strategy to assure the data stream control.

8. The integral control, security and home automation system for intelligent buildings according to claim 7, **characterized in that** control messages are sent from the control panels (2) to the HAM automation module (1) using the SHAP protocol (32), such that the control panels (2) record any change of status of a device when it receives the confirmation from the HAM automation module (I).

9. The integral control, security and home automation system for intelligent buildings according to claim 8, **characterized in that** the distribution of the information in the pieces of remote equipment is performed in two differentiated phases:
- synchronization phase, coinciding with the start-up of the piece of remote equipment or with the detection of loss of connection in the LAN network (12), wherein the configuration and status data of the apparatuses are invalid and a complete update thereof is required, which causes a traffic of query packets generated by the piece of remote equipment and directed to the HAM automation module (1), with the intention of updating all the information thereof,
and,
- refreshing phase, which allows having the status of the apparatuses updated if any piece of remote equipment or the HAM automation module (1) performs any change in the data, wherein the data refreshing process is centralized by the HAM automation module (1) which is in charge of updating the piece or pieces of remote equipment needing it.

10. The integral control, security and home automation system for intelligent buildings according to claim 9, **characterized in that** the data refreshing strategy which is followed is:
- a piece of remote equipment modifies the status of an apparatus,
- the modification is notified to the HAM automation module (1),
- the HAM automation module (1) notifies the change of status in the rest of the pieces of remote equipment, such that for the control panels (2) the notification is sent by broadcast to the network (broadcast), whereas for the local residential gateway (3) and the remote residential gateway (13), the notification is performed individually (unicast).

11. The integral control, security and home automation system for intelligent buildings according to any of claims 7 to 10, **characterized in that** the SHAP protocol (32) performs and approach based on symmetric cryptography, such that by means of an SHA-2 (Secure Hash Algorithm) algorithm a hash of the load of all the packets is calculated, and the resulting value is encrypted together with the header by means of AES (Advanced Encryption Standard), using a symmetric key shared between the entities of the system, the message being completed with a cyclic redundancy code (CRC) of the complete packet.

12. The integral control, security and home automation system for intelligent buildings according to claim 11, **characterized in that** the SHAP protocol (32) is extended for the specific task of sending alerts to an IP alarm receiver (16), (17) such that, as a step prior to sending them, a negotiation is performed which determines the format which will be used to encapsulate the alerts in the packets to be sent later, such that the HAM automation module (1) proposes a list of formats with which it is compatible and, in response, the alarm control center (14) decides which of them will be used, based on the scheme of priorities it has predefined therein.
